# FASCICULE DE BREVET EUROPEEN

(11) **EP 1 601 558 B1**
(45) Date de publication et mention de la délivrance du brevet: **05.07.2006**
(21) Numéro de dépôt: 04719484.0
(22) Date de dépôt: 11.03.2004
(51) Int. Cl.: B60R 21/34

(54) **DISPOSITIF DE PROTECTION CONTRE LES CHOCS POUR UNE FACE AVANT DE VEHICULE AUTOMOBILE**
SCHUTZVORRICHTUNG GEGEN STÖSSE FÜR EINE FAHRZEUGVORDERSEITE
IMPACT PROTECTION DEVICE FOR A FRONT FACE OF A MOTOR VEHICLE

(30) Priorité: 11.03.2003 FR 0303006
(43) Date de publication de la demande: 07.12.2005
(73) Titulaire: VALEO THERMIQUE MOTEUR, 78321 La Verriere (FR)
(72) Inventeur: MARECHAL, Laurence, F-78370 Plaisir (FR); FONSECA BARBOSA, Marcelo, F-78180 Montigny Le Bretonneux (FR); BOUMAZA, François, F-92100 Boulogne Billancourt (FR)
(86) Numéro de dépôt international: PCT/FR2004/000577
(87) Numéro de publication internationale: WO 2004/083008

(56) Documents cités:
- EP-A- 1 048 895
- AT-B- 362 240
- DE-A- 10 037 051
- DE-A- 19 802 841
- DE-A- 19 853 340
- US-A- 4 070 051

## Description

L'invention concerne un dispositif de protection contre les chocs avec un élément d'impact d'une face avant de véhicule automobile selon le préambule de la revendication 1, voir AT-B-362 240.

Par l'expression "élément d'impact", on entend désigner ici tout élément de la face avant, qu'il soit apparent ou dissimulé, qui est susceptible de présenter des "points durs", donc des points dangereux, en cas de choc frontal.

Un tel élément d'impact peut être constitué, par exemple, par un projecteur, une serrure, un radiateur, une traverse, etc. qui est intégré à la face avant et qui est susceptible de générer des dommages sérieux en cas de choc frontal à basse vitesse, notamment à l'égard d'un piéton heurté par le véhicule automobile.

Aujourd'hui, les chocs à basse vitesse sont amortis principalement par la carrosserie du véhicule et parfois par des éléments absorbeurs en mousse qui sont placés derrière le bouclier avant.

On sait aussi que la poutre pare-choc, également appelée poutre Danner, amortit les chocs plus importants (pour des vitesses allant jusqu'à environ 15 km/h). Enfin, les pièces de structure du châssis du véhicule contribuent à l'amortissement des chocs à grande vitesse.

On a proposé aussi des sacs gonflables qui, en cas de détection de choc, viennent s'expanser à l'avant du véhicule pour amortir le choc vis à vis d'un piéton, comme enseigné par la publication EP 1 024 063.

Pour ce qui concerne les impacts avec les projecteurs, différentes solutions ont déjà été proposées.

Une première solution consiste à fixer les projecteurs sur la face avant par des pattes fusibles qui comportent une zone pré-calculée pour se rompre sous une certaine force en absorbant une partie de l'énergie. Toutefois, l'amortissement procuré par ces pattes fusibles est limité et souvent insuffisant pour absorber l'énergie d'un choc contre un piéton.

Une deuxième solution consiste à utiliser une platine de fixation qui sert d'interface entre la face avant et le projecteur et qui est conçue de manière à absorber l'énergie d'un choc par déformation ou par recul du projecteur. Toutefois, cette platine constitue une pièce supplémentaire de dimensions importantes qui entraîne un montage plus complexe.

Une troisième solution consiste à fixer le projecteur avec un point de rotation sur la face avant, le projecteur étant maintenu en position par un ressort, voir US-A-4070051. En cas de choc sur le bouclier, ce dernier glisse vers l'arrière et entraîne le projecteur en rotation. Toutefois, le point de rotation du projecteur lors de l'impact peut créer un point dur sur la face avant et ainsi ne pas permettre de répondre aux critères de la législation concernant les chocs à l'égard des piétons.

L'invention a notamment pour but de surmonter les inconvénients des dispositifs de protection de l'art antérieur.

Elle vise en particulier à procurer un dispositif de protection contre les chocs, susceptible de procurer un amortissement progressif du choc, en cas de collision frontale à basse vitesse, notamment avec un piéton.

L'invention vise aussi à procurer un dispositif de protection de ce type qui est susceptible de s'appliquer à différents éléments d'impact, formant des points durs, de la face avant du véhicule automobile.

A ce titre, l'invention vise tout particulièrement- à assurer une protection vis-à-vis des impacts avec les projecteurs de la face avant.

L'invention propose à cet effet un dispositif de protection du type défini précédemment, dans lequel l'élément d'impact est maintenu dans un bloc de montage faisant partie de la face avant, par l'intermédiaire d'un organe compressible ayant une face externe reçue dans le bloc de montage et une face interne conformée pour loger l'élément d'impact.

Ainsi, la solution de l'invention consiste à interposer un organe compressible entre l'élément d'impact et un bloc de montage qui fait partie de la face avant. Cet organe compressible a des formes adaptées pour, d'une part être reçu dans le bloc de montage, et, d'autre part loger l'élément d'impact.

Dans une forme de réalisation préférée de l'invention, la face interne de l'organe compressible est pourvue d'une multiplicité de saillies agencées pour venir en contact avec l'élément d'impact et limiter ainsi la surface de contact entre l'organe compressible et l'élément d'impact. Cette caractéristique contribue à amortir le choc de façon progressive.

De façon avantageuse, ces saillies ont chacune sensiblement la forme d'un tronc de cône ayant une grande base rattachée à la face interne de l'organe compressible et une petite base propre à venir en contact avec l'élément d'impact, et admettant un axe de révolution d'orientation choisie. L'axe de révolution peut être sensiblement perpendiculaire, ou bien incliné, par rapport à la surface interne de l'organe compressible.

Les saillies en relief ont des dimensions choisies. De manière préférentielle, chaque saillie en forme de tronc de cône comporte, une petite base ayant de préférence un diamètre de 10 à 20 mm, une grande base ayant un diamètre d'environ 2,5 fois le diamètre de la petite base et une hauteur de 10 à 30 mm. De préférence également, l'organe compressible possède, au niveau de la saillie, une épaisseur de 10 à 100 mm.

Dans l'invention, l'organe compressible est de préférence formé par un bloc de mousse en une matière choisie parmi les matières plastiques du type, thermoplastique, caoutchouc, alvéolaires ou élastomère, et ayant une portance comprise entre 0,15 et 1,5 Mpa.

L'invention englobe essentiellement deux formes de réalisation procurant respectivement une solution passive et une solution active.

Pour la solution passive, l'élément d'impact est maintenu dans le bloc de montage par l'intermédiaire de moyens frangibles en emprisonnant l'organe compressible dans un état non comprimé. Il en résulte que, en cas de choc, l'élément d'impact recule dans le bloc de montage en provoquant une rupture des éléments frangibles et une compression de l'organe compressible. Ainsi, un choc frontal, par exemple dû à l'impact avec un piéton, fait reculer l'élément d'impact dans son bloc de montage, ce qui amortit considérablement le choc.

Dans cette première forme de réalisation de l'invention, les moyens frangibles comprennent avantageusement au moins une patte présentant une zone d'affaiblissement.

Pour la solution active, l'élément d'impact est maintenu dans le bloc de montage par l'intermédiaire de moyens frangibles en emprisonnant l'organe compressible dans un état comprimé. Il en résulte que, en cas de détection d'un choc, les éléments frangibles sont rompus en provoquant ainsi une décompression de l'organe compressible et un déplacement vers l'avant de l'élément d'impact. Ensuite, celui-ci est apte à se déplacer vers l'arrière sous l'action d'un choc.

Cette solution active anticipe le choc, lequel est détecté par des moyens capteurs appropriés, qui ne font pas directement partie de l'invention.

Dès lors que les moyens frangibles ont été rompus et que l'élément d'impact s'est déplacé vers l'avant du fait de la décompression de la mousse, il peut alors reculer vers l'arrière sous l'action du choc, de la même façon que dans le cas de la solution passive évoquée précédemment.

Dans cette deuxième forme de réalisation de l'invention, les moyens frangibles comprennent avantageusement au moins une patte présentant une zone de rupture à déclenchement contrôlé, qui peut être par exemple constituée par un cordon explosif.

Il est avantageux que le dispositif de protection, selon cette deuxième forme de réalisation de l'invention, comprenne en outre des moyens ressorts interposés entre l'élément d'impact et le bloc de montage et agencés pour déplacer l'élément d'impact vers l'avant lors de la rupture des moyens frangibles. Ces moyens ressorts comprennent avantageusement au moins un ressort à lame.

Comme déjà indiqué, l'élément d'impact est avantageusement un projecteur du véhicule automobile. Le bloc de montage faisant partie de la face avant constitue alors avantageusement le boîtier du projecteur.

Dans la description qui suit, faite seulement à titre d'exemple, on se réfère aux dessins annexés, sur lesquels :
- la figure 1 est une vue en coupe schématique d'un dispositif de protection selon une première forme de réalisation de l'invention, représenté en position initiale ;
- la figure 2 est une vue analogue à la figure 1 montrant le dispositif dans une position d'impact ;
- la figure 3 est une vue schématique en coupe verticale d' un dispositif de protection selon une deuxième forme de réalisation de l'invention, représenté en position initiale ;
- la figure 4 est une vue analogue à la figure 3 montrant le dispositif de protection en position de détection ;
- la figure 5 est une vue analogue aux figures 3 et 4 montrant le dispositif de protection en position d'impact ;
- la figure 6 montre un ensemble associant une patte frangible et une lame ressort, pouvant être utilisé dans le dispositif de protection des figures 3 à 5 ;
- la figure 7 est une vue en perspective d'un organe compressible, réalisé sous la forme d'un bloc de mousse dans une forme de réalisation de l'invention ;
- la figure 8 est une vue en perspective d'un bloc de mousse analogue à celui de la figure 7 et comportant des cônes en saillie;
- la figure 9 montre un cône en saillie;
- la figure 10 est une vue analogue à la figure 8 montrant un élément d'impact, ici un projecteur, logé dans l'organe compressible ; et
- la figure 11 est une vue en perspective analogue à la figure 8, dans laquelle les cônes sont inclinés.

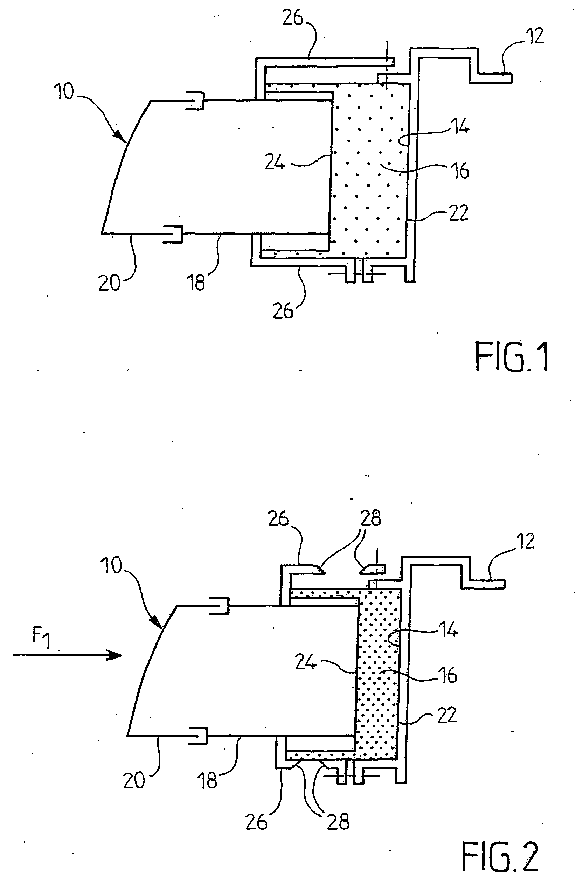

On se réfère d'abord à la figure 1 qui montre un dispositif de protection contre les chocs avec un élément d'impact 10 qui, dans l'exemple est un projecteur de véhicule automobile. Ce projecteur est porté par un support 12, appelé "support de face avant" qui est lui-même fixé à la structure (non représentée) du véhicule automobile. Un tel support 12 constitue un module pré-équipé qui est fabriqué par l'équimentier et qui est monté par le constructeur sur une chaîne de montage de véhicules automobiles. Le support 12 est aménagé ici pour définir un bloc de montage 14 qui fait partie de la face avant. Ce bloc de montage forme un boîtier qui délimite un logement ouvert vers l'avant et qui est destiné à recevoir le projecteur avec interposition d'un organe compressible 16.

Le projecteur 10 est formé essentiellement d'un boîtier 18 qui reçoit une glace 20. L'organe compressible 16 est un élément conformé, dans l'exemple un bloc de mousse, qui a une face externe 22 (ou face arrière) reçue dans le bloc de montage 14 et une face interne 24 (ou face antérieure) conformée pour loger le boîtier 18 du projecteur 10.

En outre, le boîtier 18 est relié au bloc de montage 14 par des pattes de fixation 26 présentant une zone d'affaiblissement pour constituer des moyens frangibles, c'est-à-dire des moyens susceptibles de se rompre dans des conditions définies ou contrôlées. En variante, le bloc de montage peu être formé par le boîtier du projecteur.

L'organe compressible est réalisé ici sous la forme d'un bloc de mousse dans une matière choisie notamment dans le groupe des matières thermoplastiques, des matières plastiques ou des caoutchoucs alvéolaires; cette liste étant non limitative.

A titre d'exemple, on peut utiliser une mousse de polyuréthane du type commercialisé par la Société Bayer, sous la Marque Bayfill ayant une densité de 66 kg/m³. Il peut s'agir aussi d'une mousse dite "CONFOR" d'une densité de 93 kg/m³, commercialisée par la Société Safety Devises. Un autre exemple est une mousse de polypropylène commercialisée par la société Dow sous la Marque STRANDFOAM, ayant une densité de 44 kg/m³.

Ces mousses ont une bonne capacité d'absorption. Leur portance varie généralement de 0,15 à 1,5 Mpa.

Dans la position normale, ou position initiale, telle que représentée à la figure 1, le projecteur 10 est maintenu dans le bloc de montage 14 par les pattes de fixation 26, l'organe compressible se trouvant dans un état non comprimé.

En cas de choc, par exemple avec un piéton, dans la direction de la flèche F1 (figure 2), le projecteur 10 recule dans le bloc de montage 14, ce qui provoque à la fois la rupture des pattes de fixation 26 et la compression de l'organe compressible 16. Le projecteur 10 recule ainsi d'une distance qui peut être de l'ordre de 20 mm, ce qui amortit le choc.

Les pattes de fixation 26 comportent à cet effet des zones d'affaiblissement 28, par exemple des zones d'étranglement, qui sont représentées après rupture sur la figure 2. Ainsi, le dispositif de protection des figures 1 et 2 offre une solution passive.

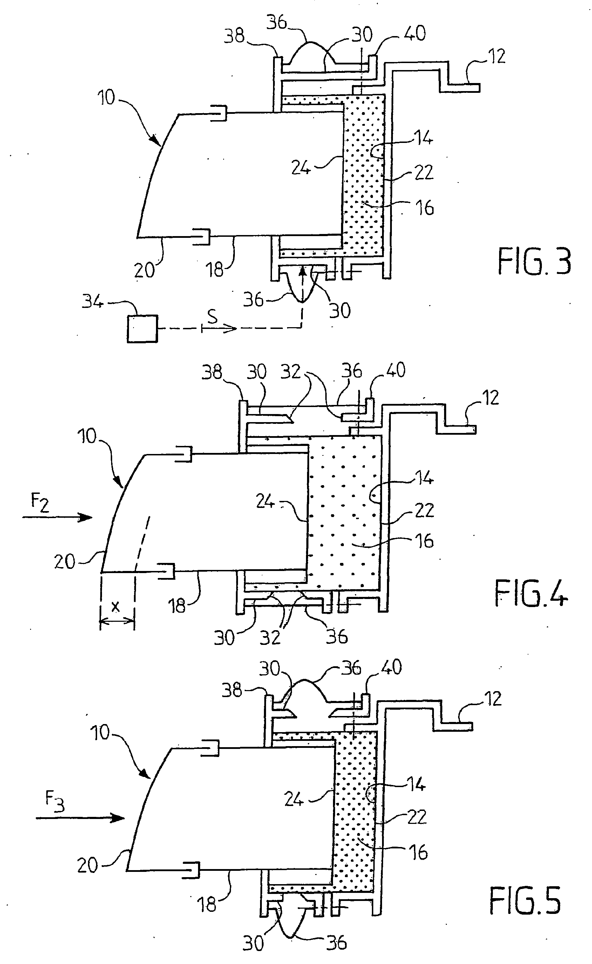

On se réfère maintenant à la figure 3 qui montre une autre variante de réalisation de l'invention constituant une solution active. Les éléments communs avec ceux des figures 1 et 2 sont désignés par les mêmes références. L'élément d'impact 10, qui est aussi un projecteur, est maintenu dans le bloc de montage 14 par l'intermédiaire de moyens frangibles 30 en emprisonnant l'organe compressible 16 dans un état comprimé, et non pas dans un état non comprimé comme dans la forme de réalisation précédente.

Ces moyens frangibles 10, sont constitués aussi par des pattes de fixation présentant une zone de rupture 32 (figure 4). Toutefois, ces zones de rupture sont ici à déclenchement contrôlé, c'est à dire qu'elles peuvent être rompues volontairement grâce à un signal de déclenchement approprié. Elles se distinguent donc des zones de rupture 28 des pattes 26 de la forme de réalisation précédente qui, elles, sont rompues sous l'action d'un choc.

La détection d'un choc s'effectue par un capteur approprié. 34, par exemple du type radar, placé dans un endroit choisi de la face avant. Ce capteur approprié, qui ne fait pas directement partie de l'objet de l'invention, est capable de détecter un risque de collision et d'envoyer un signal S pour déclencher délibérément une rupture des zones de rupture 32 des pattes 30.

En ce cas, et comme montré à la figure 4, les pattes se rompent, ce qui provoque un mouvement vers l'avant (flèche F2) du projecteur 10 sous l'effet de la décompression de la mousse, d'une distance x, par exemple de l'ordre de 20 mm. Ce mouvement vers l'avant est aussi favorisé par la présence d'un ressort à lame 36 qui est interposé entre les deux extrémités 38 et 40 de la patte de fixation 30.

Dans la position de la figure 3, les deux ressorts sont incurvés alors que, dans le cas de la figure 4, les deux ressorts sont étendus à plat.

Lorsque le projecteur 10 est parvenu dans la position de détection de la figure 4, il se trouvé dans une position analogue à la position initiale de la forme de réalisation précédente, l'organe compressible 16 étant à l'état décomprimé.

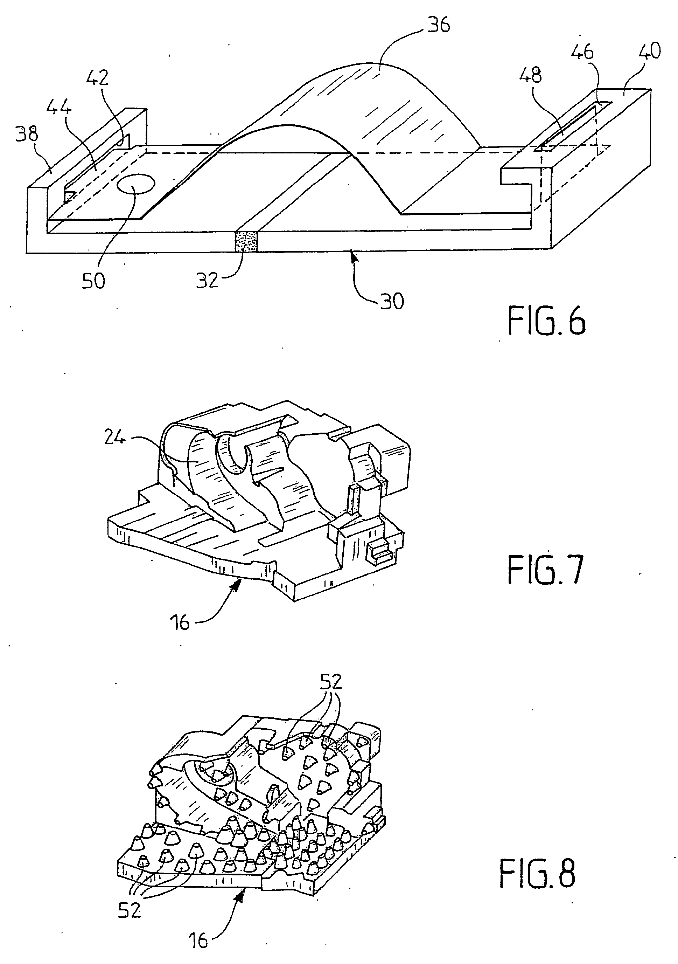

Ensuite, en cas de choc comme montré par la flèche F3 sur la figure 5, le projecteur 10 peut reculer par rapport à la face avant en.provoquant la compression de l'organe compressible 16 et la déformation des deux ressorts 36 qui se trouvent à nouveau à l' état incurvé.

On se réfère maintenant à la figure 6 qui montre en détail une patte de fixation 30 à laquelle est associée une lame ressort 36. La patte de fixation 30 comporte une zone de rupture 32 à déclenchement contrôlé, constituée ici par un cordon explosif. Ce dernier peut être constitué par une amorce du type de celles qui sont utilisées sur les sacs gonflables, encore appelés "Airbag" (marque déposée) des véhicules automobiles.

La patte de fixation 30 comprend deux extrémités repliées 38 et 40. L'extrémité 38 délimite une encoche 42 dans laquelle vient s'engager une extrémité 44 de la lame ressort. De même, l'extrémité 40 de la patte de fixation comporte une encoche 46 dans laquelle vient s'engager une extrémité 48 de la lame ressort. Cette dernière est en outre fixée sur le plan de la patte par une fixation 50. Il en résulte que, après rupture des pattes de fixation, ces dernières ont leurs extrémités reliées ensemble par l'intermédiaire de la lame ressort comme on peut le voir sur la figure 4, empêchant ainsi une désolidarisation du projecteur par rapport à la face avant.

On se réfère maintenant à la figure 7 qui montre un exemple d'un bloc compressible 16 de forme assez complexe, adapté pour se loger dans un bloc de montage et pour recevoir un élément d'impact 10, ici un projecteur.

Dans l'exemple de la figure 7, la face interne 24 de l'organe compressible 16 est lisse. Par contre, dans le cas de la figure 8, cette face interne est munie d'une multiplicité de saillies 52 en forme de tronc de cône qui sont agencées pour venir en contact avec l'élément d'impact 10 (ici le boîtier 18 du projecteur) et limiter ainsi la surface de contact entre l'organe compressible et l'élément d'impact. Ceci permet d'amortir le choc de façon progressive.

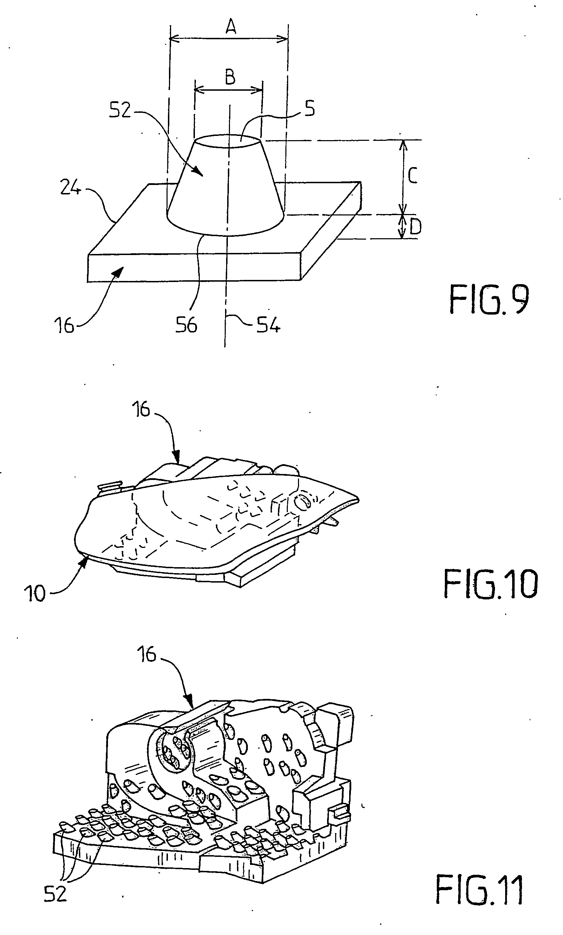

Comme on peut le voir sur la figure 9, les saillies 52 en forme de tronc de cône ont un axe de révolution 54 qui est sensiblement perpendiculaire à la surface interne 24 de l'organe compressible 16. Chacune des saillies 52 comporte une grande base 56 rattachée à la face interne 24 de l'organe compressible et une petite base 58 propre à venir en contact avec l'élément d'impact 10, ici avec le boîtier 18 d'un projecteur.

La petite base possède de préférence un diamètre B de 10 à 20 mm, la grande base un diamètre A d'environ 2,5 fois le diamètre B, et une hauteur C de 10 à 30 mm. Au niveau de la saillie, l'organe compressible 16 possède une épaisseur D de 10 à 100 mm.

La figure 10 est analogue à la figure 8. Elle montre le même organe compressible 16 qui reçoit le projecteur 10.

La forme dé réalisation de la figure 11 s'apparente étroitement.à celle de la figure 8. La différence principale réside ici dans le fait que les saillies 52, qui sont également en forme de cône, ont chacune leur axe incliné par rapport à la face interne 24, l'inclinaison pouvant être par exemple de 45 degrés.

L'invention s'applique bien entendu à la protection des chocs vis à vis d'autres éléments d'impact de la face avant, qu'il s'agisse d'éléments apparents ou dissimulés.

## Revendications

1. Dispositif de protection contre les chocs avec un élément d'impact (10) d'une face avant de véhicule automobile, un bloc de montage (14) et un organe compressible (16), **caractérisé en ce que** l'élément d'impact (10) est maintenu dans le bloc de montage (14) faisant partie de la face avant, par l'intermédiaire de l'organe compressible (16) ayant une face externe (22) reçue dans le bloc de montage (14) et une face interne (24) conformée pour loger l'élément d'impact (10).

2. Dispositif selon la revendication 1, **caractérisé en ce que** la face interne (24) de l'organe compressible (16) est pourvue d'une multiplicité de saillies (52) agencées pour venir en contact avec l'élément d'impact (10) et limiter ainsi la surface de contact entre l'organe compressible (16) et l'élément d'impact (10).

3. Dispositif selon la revendication 2, **caractérisé en ce que** les saillies (52) ont chacune sensiblement la forme d'un tronc de cône ayant une grande base (56) rattachée à la face interne (24) de l'organe compressible (16) et une petite base (58) propre à venir en contact avec l'élément d'impact (10), et admettant un axe de révolution (54) d'orientation choisie.

4. Dispositif selon la revendication 3, **caractérisé en ce que** l'axe de révolution (54) de la saillie (52) en forme de tronc de cône est sensiblement perpendiculaire à la surface interne (24) de l'organe compressible (16).

5. Dispositif selon la revendication 3, **caractérisé en ce que** l'axe de révolution (54) de la saillie (52) en forme de tronc de cône est incliné par rapport à la surface interne (24) de l'organe compressible (16).

6. Dispositif selon l'une des revendications 3 à 5, **caractérisé en ce que** la saillie (52) en forme de tronc de cône comporte une petite base (58) ayant un diamètre (B) de 10 à 20 mm, une grande base (56) ayant un diamètre (A) d'environ 2,5 fois le diamètre de la petite base et une hauteur (C) de 10 à 30 mm, et **en ce que** l'organe compressible (16) possède, au niveau de la saillie, une épaisseur (D) de 10 à 100 mm.

7. Dispositif selon l'une des revendications 1 à 6, **caractérisé en ce que** l'organe compressible (16) est formé par un bloc de mousse en une matière choisie parmi les matières plastiques du type thermoplastique, caoutchouc, alvéolaire ou élastomère, et ayant une portance comprise entre 0,15 et 1,5 Mpa.

8. Dispositif selon l'une des revendications 1 à 7, **caractérisé en ce que** l'élément d'impact (10) est maintenu dans le bloc de montage (14) par l'intermédiaire de moyens frangibles (26) en emprisonnant l'organe compressible (16) dans un état non comprimé en sorte que, en cas de choc, l'élément d'impact (10) recule dans le bloc de montage (14) en provoquant une rupture des moyens frangibles (26) et une compression de l'organe compressible (16).

9. Dispositif selon la revendication 8, **caractérisé en ce que** les moyens frangibles comprennent au moins une patté (26) présentant une zone d'affaiblissement (28).

10. Dispositif selon l'une des revendications 1 à 7, **caractérisé en ce que** l'élément d'impact (10) est maintenu dans le bloc de montage (14) par l'intermédiaire de moyens frangibles (30) en emprisonnant l'organe compressible (16) dans un état comprimé en sorte que, en cas de détection d'un choc, les moyens frangibles (30) sont rompus en provoquant ainsi une décompression de l'organe compressible (16) et un déplacement vers l'avant de l'élément d'impact (10), lequel est apte à se déplacer ensuite vers l'arrière sous l'action d'un choc.

11. Dispositif selon la revendication 10, **caractérisé en ce que** les moyens frangibles comprennent au moins une patte (30) présentant une zone de rupture (32) à déclenchement contrôlé.

12. Dispositif selon la revendication 11, **caractérisé en ce que** la zone de rupture (32) à déclenchement contrôlé est un cordon explosif.

13. Dispositif selon l'une des revendications 10 à 12, **caractérisé en ce qu'**il comprend en outre des moyens ressorts (36) interposés entre l'élément d'impact (10) et le bloc de montage (14) et agencés pour déplacer l'élément d'impact (10) vers l'avant lors de la rupture des moyens frangibles (30).

14. Dispositif selon la revendication 13, **caractérisé en ce que** les moyens ressorts comprennent au moins un ressort à lame (36).

15. Dispositif selon l'une des revendications 1 à 14, **caractérisé en ce que** l'élément d'impact (10) est un projecteur.

16. Dispositif selon la revendication 15, **caractérisé en ce que** le bloc de montage faisant partie de la face avant est le boîtier du projecteur.

## Claims

1. Impact protection device comprising an impact element (10) belonging to a motor vehicle front end, a mounting block (14) and a compressible member (16), **characterized in that** the impact element (10) is held in the mounting block (14), forming part of the front end, by way of the compressible member (16), which has an external face (22) received in the mounting block (14) and an internal face (24) configured to house the impact element (10).

2. Device according to Claim 1, **characterized in that** the internal face (24) of the compressible member (16) is provided with a multiplicity of projections (52) designed to come into contact with the impact element (10) and thus limit the contact surface between the compressible member (16) and the impact element (10).

3. Device according to Claim 2, **characterized in that** the projections (52) each have approximately the shape of a truncated cone having a large base (56) attached to the internal face (24) of the compressible member (16) and a small base (58) which can come into contact with the impact element (10), the projections allowing an axis of revolution (54) of chosen orientation.

4. Device according to Claim 3, **characterized in that** the axis of revolution (54) of the projection (52) in the form of a truncated cone is substantially perpendicular to the internal surface (24) of the compressible member (16).

5. Device according to Claim 3, **characterized in that** the axis of revolution (54) of the projection (52) in the form of a truncated cone is inclined with respect to the internal surface (24) of the compressible member (16).

6. Device according to one of Claims 3 to 5, **characterized in that** the projection (52) in the form of a truncated cone comprises a small base (58) having a diameter (B) of 10 to 20 mm, a large base (56) having a diameter (A) of about 2.5 times the diameter of the small base, and a height (C) of 10 to 30 mm, and **in that** the compressible member (16) has, in the region of the projection, a thickness (D) of 10 to 100 mm.

7. Device according to one of Claims 1 to 6, **characterized in that** the compressible member (16) is formed by a block of foam made of a material chosen from plastics of the thermoplastic, rubber, cellular or elastomeric type and having a load-bearing capacity of between 0.15 and 1.5 MPa.

8. Device according to one of Claims 1 to 7, **characterized in that** the impact element (10) is held in the mounting block (14) by way of breakable means (26) and thereby traps the compressible member (16) in a non-compressed state such that, in the event of impact, the impact element (10) retreats into the mounting block (14), causing the breakable means (26) to rupture and the compressible member (16) to be compressed.

9. Device according to Claim 8, **characterized in that** the breakable means comprise at least one bracket (26) having a weakening zone (28).

10. Device according to one of Claims 1 to 7, **characterized in that** the impact element (10) is held in the mounting block (14) by way of breakable means (30) and thereby traps the compressible member (16) in a compressed state such that, in the event of an impact being detected, the breakable means (30) are broken, thus causing decompression of the compressible member (16) and forward displacement of the impact element (10), the latter being able to be displaced rearwardly thereafter under the action of an impact.

11. Device according to Claim 10, **characterized in that** the breakable means comprise at least one bracket (30) having a controlled-activation rupture zone (32).

12. Device according to Claim 11, **characterized in that** the controlled-activation rupture zone (32) is an explosive cord.

13. Device according to one of Claims 10 to 12, **characterized in that** it additionally comprises spring means (36) interposed between the impact element (10) and the mounting block (14) and designed to displace the impact element (10) forwards upon rupture of the breakable means (30).

14. Device according to Claim 13, **characterized in that** the spring means comprise at least one leaf spring (36).

15. Device according to one of Claims 1 to 14, **characterized in that** the impact element (10), is a headlight.

16. Device according to Claim 15, **characterized in that** the mounting block forming part of the front end is the headlight housing.

## Patentansprüche

1. Schutzvorrichtung gegen die Stöße mit einem Stoßelement (10) einer Vorderfront eines Kraftfahrzeugs, einem Montageblock (14) und einem komprimierbaren Element (16), **dadurch gekennzeichnet, dass** das Stoßelement (10) in dem Montageblock (14), der Teil der Vorderfront ist, mit Hilfe des komprimierbaren Elements (16) gehalten wird, das eine Vorderseite (22), die in dem Montageblock (14) aufgenommen wird, und eine Innenseite (24) aufweist, die derart ausgebildet ist, dass sie das Stoßelement (10) aufnimmt.

2. Vorrichtung nach Anspruch 1, **dadurch gekennzeichnet, dass** die Innenseite (24) des komprimierbaren Elements (16) mit einer Vielzahl von Vorsprüngen (52) versehen ist, die derart angeordnet sind, dass sie mit dem Stoßelement (10) in Kontakt kommen und so die Kontaktfläche zwischen dem komprimierbaren Element (16) und dem Stoßelement (10) begrenzen.

3. Vorrichtung nach Anspruch 2, **dadurch gekennzeichnet, dass** die Vorsprünge (52) jeweils im Wesentlichen die Form eines Kegelstumpfes haben, der eine große Basis (56), die mit der Innenseite (24) des komprimierbaren Elements (16) verbunden ist, und eine kleine Basis (58) aufweist, die mit dem Stoßelement (10) in Kontakt kommen kann, wobei sich eine Umdrehungsachse (54) mit gewählter Ausrichtung ergibt.

4. Vorrichtung nach Anspruch 3, **dadurch gekennzeichnet, dass** die Umdrehungsachse (54) des Vorsprungs (52) in Form eines Kegelstumpfes im Wesentlichen senkrecht zu der Innenfläche (24) des komprimierbaren Elements (16) steht.

5. Vorrichtung nach Anspruch 3, **dadurch gekennzeichnet, dass** die Umdrehungsachse (54) des Vorsprungs (52) in Form eines Kegelstumpfes in Bezug auf die Innenseite (24) des komprimierbaren Elements (16) geneigt ist.

6. Vorrichtung nach einem der Ansprüche 3 bis 5, **dadurch gekennzeichnet, dass** der Vorsprung (52) in Form eines Kegelstumpfes eine kleine Basis (58) mit einem Durchmesser (B) von 10 bis 20 mm, eine große Basis (56) mit einem Durchmesser (A) von ungefähr 2,5 Mal dem Durchmesser der kleinen Basis und eine Höhe (C) von 10 bis 30 mm umfasst und dass das komprimierbare Element (16) im Bereich des Vorsprungs eine Dicke (D) von 10 bis 100 mm besitzt.

7. Vorrichtung nach einem der Ansprüche 1 bis 6, **dadurch gekennzeichnet, dass** das komprimierbare Element (16) von einem Schaumblock aus einem Material gebildet ist, das ausgewählt wird unter den Kunststoffen des Typs Thermoplast, Kautschuk, Zellstoff oder Elastomer, und eine Tragfähigkeit zwischen 0,15 und 1,5 Mpa besitzt.

8. Vorrichtung nach einem der Ansprüche 1 bis 7, **dadurch gekennzeichnet, dass** das Stoßelement (10) in dem Montageblock (14) mit Hilfe von Bruchmitteln (26) gehalten wird, wobei das komprimierbare Element (16) in einem nicht komprimierten Zustand eingeschlossen ist, so dass sich im Falle eines Aufpralls das Stoßelement (10) in den Montageblock (14) zurückzieht, wobei es einen Bruch der Bruchmittel (26) und eine Kompression des komprimierbaren Elements (16) hervorruft.

9. Vorrichtung, nach Anspruch 8, **dadurch gekennzeichnet, dass** die Bruchmittel mindestens ein Stück (26) umfassen, das eine Schwächungszone (28) aufweist.

10. Vorrichtung nach einem der Ansprüche 1 bis 7, **dadurch gekennzeichnet, dass** das Stoßelement (10) in dem Montageblock (14) mit Hilfe von Bruchmitteln (30) gehalten wird, wobei das komprimierbare Element (16) in einem komprimierten Zustand eingeschlossen ist, so dass im Falle einer Erfassung eines Aufpralls die Bruchmittel (30) zerbrochen werden, wobei somit eine Dekompression des komprimierbaren Elements (16) und eine Verschiebung des Stoßelements (10) nach vorne hervorgerufen werden, wobei das Element sich dann unter der Wirkung eines Aufpralls nach hinten schieben kann.

11. Vorrichtung nach Anspruch 10, **dadurch gekennzeichnet, dass** die Bruchmittel mindestens ein Stück (30) umfassen, das eine Bruchzone (32) mit kontrollierter Auslösung aufweist.

12. Vorrichtung nach Anspruch 11, **dadurch gekennzeichnet, dass** die Bruchzone (32) mit kontrollierter Auslösung eine Zündschnur ist.

13. Vorrichtung nach einem der Ansprüche 10 bis 12, **dadurch gekennzeichnet, dass** sie ferner Federmittel (36) umfasst, die zwischen dem Stoßelement (10) und dem Montageblock (14) angeordnet und derart vorgesehen sind, dass sie das Stoßelement (10) beim Brechen der Bruchmittel (30) nach vorne schieben.

14. Vorrichtung nach Anspruch 13, **dadurch gekennzeichnet, dass** die Federmittel mindestens eine Blattfeder (36) umfassen.

15. Vorrichtung nach einem der Ansprüche 1 bis 14, **dadurch gekennzeichnet, dass** das Stoßelement (10) ein Projektor ist.

16. Vorrichtung nach Anspruch 15, **dadurch gekennzeichnet, dass** der Montageblock, der Teil der Vorderseite ist, das Gehäuse des Projektors ist.
